# EUROPEAN PATENT APPLICATION

(11) **EP 2 434 837 A1**
(43) Date of publication of application: **28.03.2012**
(21) Application number: 10777545.4
(22) Date of filing: 17.05.2010
(51) Int. Cl.: H05B 6/68

(54) **MICROWAVE HEATING DEVICE AND MICROWAVE HEATING METHOD**

(30) Priority: 19.05.2009 JP 2009120587; 26.06.2009 JP 2009151967
(71) Applicant: Panasonic Corporation, Kadoma-shi Osaka 571-8501 (JP)
(72) Inventor: MIHARA, Makoto, 540-6207 Osaka (JP); YASUI, Kenji, 540-6207 Osaka (JP); NOBUE, Tomotaka, 540-6207 Osaka (JP); OOMORI, Yoshiharu, 540-6207 Osaka (JP)
(74) Representative: Schwabe - Sandmair - Marx
(86) International application number: PCT/JP2010/003293
(87) International publication number: WO 2010/134307

(57) **Abstract**

In order to provide a microwave heating device and a microwave heating method, which can surely prevent a microwave generating part from being destroyed by reflected power and which can heat a heating-target portion in a heating chamber with high efficiency, the present invention is configured such that, prior to a control part (1), which receives a reflected power signal and a supply power signal from a power detecting part (4), starting a heating operation to an object (15) to be heated in a heating chamber (7), the control part (1) executes a frequency sweep operation of a prescribed frequency band with frequency sweep power lower than rated supply power supplied to a power feeding part (5) during the heating operation, to thereby set an oscillation frequency at which the minimum reflected power becomes minimum, and to control an oscillation frequency of an oscillator part (2) and an output of a power amplifier part (3).

## Description

### Technical Field

The present invention relates to a microwave heating device provided with a microwave generating part structured by using semiconductor elements, and a microwave heating method.

### Background Art

In recent years, it is proposed that a microwave generating part uses semiconductor elements instead of a magnetron which has been generally used as a conventional microwave generating part. Such a microwave generating part using semiconductor elements is advantageous in its being small in size, being structured in a cost-effective manner, and in that the frequency of the generated microwave can be adjusted with ease.

When the microwave power supplied into the heating chamber is absorbed by an object to be heated by 100%, the reflected power returning from the heating chamber side via the antenna to the microwave generating part side becomes zero. The reflected power transmitted from the heating chamber side to the microwave generating part side is generated based on the output impedance of the microwave generating part and the impedance of the heating chamber. Depending on many conditions such as the type, shape, and amount of the object to be heated, and the position of the object to be heated in the heating chamber, the electric characteristic of the heating chamber including the object to be heated varies. Therefore, the electric characteristic of the heating chamber is always different. Hence, the microwave power is not always absorbed entirely by the object to be heated in the heating chamber, and the reflected power is generated.

In connection with the microwave heating device, it is general to use an isolator in order to avoid the effect of the reflected power. For example, see Japanese Unexamined Patent Application Publication No. 2006-128075. As disclosed therein, the microwave heating device using an isolator is configured such that the effect of the reflected power can surely be avoided, and the semiconductor elements of the microwave generating part will not be destroyed by the reflected power.

Japanese Unexamined Patent Application Publication No. S56-96486 discloses a microwave heating device in which, prior to start of an actual heating operation, the frequency of a microwave is swept within a prescribed frequency band, and the oscillation frequency at which the reflected power is at a minimum within the frequency band is stored. With the microwave heating device, in the actual heating operation, the microwave at the previously stored oscillation frequency is radiated from the antenna in the heating chamber to heat the object to be heated being the heating target inside the heating chamber. With such a structure, the conventional high-frequency heating device achieves an improvement in the power conversion efficiency.

### Citation List

### Patent Literatures

PLT 1: Japanese Unexamined Patent Application Publication No. 2006-128075
PLT 2: Japanese Unexamined Patent Application Publication No. S56-96486

### Non Patent Literature

NPL1: NON-PATENT DOCUMENT 1: Kiyoshi SUZUKI "Basics of Microwave Circuit", Keigaku Shuppan, June 25, 1971, P.163

### Summary of Invention

### Technical Problem

In connection with the microwave heating device using semiconductor elements as the microwave generating part, use of an isolator for preventing the semiconductor elements from being destroyed by the reflected power is not preferable from the viewpoint of an increase in the size of the device and cost-effectiveness, because the isolator is a very expensive and large-sized component. Accordingly, since the conventional microwave heating device using a magnetron as the microwave generating part is robust to the reflected power and cost-effective, it is easier for the user to purchase and is very convenient.

Further, in these microwave heating devices using the semiconductor elements as the microwave generating part, there is a device in which, on the preliminary stage before the actual heating operation is performed, a frequency at which the reflected power becomes minimum is searched for within a prescribed frequency band and stored, and the heating operation is performed at the stored frequency. However, with such a microwave heating device, since the heating operation is performed at the previously stored frequency even in a situation where the behavior of the reflected power varies due to the state of the load being varied during heating, it cannot address the reflected power of a value that may destroy the semiconductor element, or variations in the reflected power occurring during the heating operation.

An object of the present invention is to provide a microwave heating device and a microwave heating method, which can surely prevent the microwave generating part from being destroyed by the reflected power, and that can heat the object to be heated in the heating chamber highly efficiently.

### Solution to Problem

A microwave heating device according to a first aspect of the present invention includes:
a heating chamber that accommodates an object to be heated;
an oscillator part that outputs a signal at an oscillation frequency within a prescribed frequency band;
a power amplifier part that amplifies power of an output of the oscillator part;
a power feeding part that supplies an output of the power amplifier part to the heating chamber;
a power detecting part that detects reflected power reflected from the heating chamber to the power amplifier part via the power feeding part, and supply power supplied from the power amplifier part to the power feeding part, and
a control part that receives a reflected power signal and a supply power signal from the power detecting part, to control the oscillation frequency of the oscillator part and the output of the power amplifier part, wherein
prior to start of a heating operation to an object to be heated in the heating chamber, the control part executes a frequency sweep operation of a prescribed frequency band with frequency sweep power being lower than rated supply power being supplied to the power feeding part when the heating operation is performed, to search for minimum reflected power,
the control part adjusts, in accordance with the minimum reflected power, feeding power to be supplied to the power feeding part when the heating is performed, and
the control part performs the heating operation at an oscillation frequency that exhibits the minimum reflected power in the frequency sweep operation. The microwave heating device according to the first aspect structured in this manner can surely prevent the microwave generating part from being destroyed by the reflected energy of the reflected power, and can heat the heating-target portion with high heating efficiency.

In the microwave heating device according to a second aspect of the present invention,
prior to start of the heating operation to the object to be heated in the heating chamber,
the control part according to the first aspect executes the frequency sweep operation of the prescribed frequency band with the frequency sweep power, to determine an oscillation frequency at which a reflection ratio of the reflected power to the supply power assumes a minimum value, and
the control part is configured to adjust the feeding power supplied to the power feeding part, in accordance with the minimum reflected power at the determined oscillation frequency. The microwave heating device according to the second aspect structured in this manner can reduce the heating output when the reflected power is great; and conversely, can raise the heating output when the reflected power is small, to carry out heating with the rated output. Accordingly, the microwave heating device of the present invention can prevent the semiconductor elements being used for the power amplifier part as the power unit from being destroyed by the reflected energy of the reflected power during the heating operation, without the necessity of using an isolator.

In the microwave heating device according to a third aspect of the present invention,
posterior to start of the heating operation to the object to be heated in the heating chamber,
the control part according to the second aspect interrupts the heating operation for a prescribed time, and executes the frequency sweep operation of the prescribed frequency band with the frequency sweep power, to redetermine the oscillation frequency at which the reflection ratio of the reflected power to the supply power assumes the minimum value, and
the control part is configured to adjust the feeding power supplied to the power feeding part, in accordance with the minimum reflected power at the redetermined oscillation frequency. With the microwave heating device according to the third aspect structured in this manner, it becomes possible to increase the heating output when the reflection ratio is small to carry out heating with the rated output; conversely, to reduce the heating output when the reflection ratio is great. Thus, the semiconductor elements of the power amplifier part being the power unit can surely be prevented from being destroyed by the reflected energy during the heating operation, without the necessity of using an isolator.

In the microwave heating device according to a fourth aspect of the present invention,
posterior to start of the heating operation at the oscillation frequency determined by the execution of the frequency sweep operation prior to start of the heating operation to the object to be heated in the heating chamber,
the control part according to the first aspect may interrupt the heating operation and re-executes the frequency sweep operation, to redetermine the oscillation frequency at which the minimum reflected power detected by the power detecting part is attained, and
the control part may transit to the heating operation at the redetermined oscillation frequency. With the microwave heating device according to the fourth aspect structured in this manner, prior to the heating operation, an operation condition with which the reflected power is minimized is searched for by the frequency sweep operation, and based on the search result, the heating operation is performed. Therefore, it becomes possible to prevent the reflected energy of excessively great reflected power from entering the power amplifier, to prevent the power amplifier being destroyed by the heat generated by the reflected power, and to realize a highly efficient heating operation. Further, for example, even in a case where the object to be heated is a frozen food and the impedance of the heating chamber greatly varies due to thawing of the object to be heated, the optimum oscillation frequency is set again while the heating operation is stopped. Therefore, it is possible to realize the heating operation with constant high efficiency in accordance with the state of the object to be heated.

In the microwave heating device according to a fifth aspect of the present invention,
the control part according to the fourth aspect may repetitively perform, at preset time intervals, the heating operation and a heating operation stop of interrupting the heating operation and executing the frequency sweep operation. With the microwave heating device according to the fifth aspect structured in this manner, in a case where the impedance of the heating chamber greatly varies due to the state of the object to be heated, e.g., thawing of the object to be heated, the optimum oscillation frequency is set every lapse of a prescribed time. Therefore, it becomes possible to realize a highly efficient heating operation in accordance with the state of the object to be heated.

In the microwave heating device according to a sixth aspect of the present invention,
posterior to start of the heating operation, the control part according to the fourth aspect may perform a heating operation stop of interrupting the heating operation and executing the frequency sweep operation, when the reflected power detected by the power detecting part becomes equal to or more than a predetermined threshold value. With the microwave heating device according to the sixth aspect structured in this manner, even in a case where the impedance of the heating chamber greatly varies due to the state of the object to be heated and the reflected power becomes great, the optimum oscillation frequency is set again during the heating operation stop. Therefore, it becomes possible to realize a highly efficient heating operation in accordance with the state of the object to be heated.

In the microwave heating device according to a seventh aspect of the present invention,
the control part according to the sixth aspect may interrupt the heating operation and executes the frequency sweep operation, when the reflected power detected by the power detecting part fails to become equal to or more than the threshold value within a preset time. With the microwave heating device according to the seventh aspect structured in this manner, even in a case where the reflected power fails to become equal to or more than the threshold value during the heating operation, the heating operation is stopped and the optimum oscillation frequency is set again taking into consideration of variations in the impedance of the heating chamber. Therefore, a highly efficient heating operation can be realized.

The microwave heating device according to an eighth aspect of the present invention may further include, based on the first to seventh aspects,
a power divider part that divides the output of the oscillator part to supply to a plurality of power amplifier parts, wherein
outputs of the plurality of power amplifier parts are respectively supplied to a plurality of power feeding parts, to radiate microwaves into the heating chamber. The microwave heating device according to the eighth aspect structured in this manner radiates microwaves from the plurality of power feeding parts inside the heating chamber and, consequently, it combines microwaves in the internal space of the heating chamber. As a result, the microwave heating device according to the eighth aspect can intensely feed power from the plurality of power feeding parts to the heating chamber to obtain a high output, and the plurality of power feeding parts can be dispersedly disposed in the heating chamber. Thus, by effectively using the space between the casing structuring the appearance and the heating chamber, the components can highly efficiently be disposed to achieve miniaturization.

The microwave heating device according to a ninth aspect of the present invention may further include, based on the first to seventh aspects,
a power divider part that divides the output of the oscillator part to supply to a plurality of power amplifier parts,
a phase control part that allows phases of microwave power supplied to the plurality of power amplifier parts to be variable, wherein
outputs of the plurality of power amplifier parts may be respectively supplied to a plurality of power feeding parts, to radiate microwaves into the heating chamber. The microwave heating device according to the ninth aspect structured in this manner radiates microwaves from the plurality of power feeding parts into the heating chamber, and is capable of varying the phase difference between the power feeding parts. By allowing the phase difference to be variable in this manner, it becomes possible to freely form the electromagnetic field distribution, and to selectively heat a particular portion in the object to be heated.

A microwave heating method according to a tenth aspect of the present invention includes:
outputting by an oscillator part a signal at an oscillation frequency within a prescribed frequency band;
amplifying power of an output of the oscillator part by a power amplifier part;
supplying an output of the power amplifier part by a power feeding part to a heating chamber;
detecting, by a power detecting part, reflected power that reflects from the heating chamber side to the power amplifier part via the power feeding part and supply power that is supplied from the power amplifier part to the power feeding part;
controlling, by a control part receiving a reflected power signal and a supply power signal from the power detecting part, the oscillation frequency of the oscillator part and the output of the power amplifier part;
prior to start of a heating operation to an object to be heated in the heating chamber, executing a frequency sweep operation of a prescribed frequency band with frequency sweep power being lower than rated supply power being output as a microwave to the object to be heated in the heating chamber when the heating operation is performed, to search for minimum reflected power;
adjusting, in accordance with the minimum reflected power, feeding power to be supplied to the power feeding part when the heating is performed; and
executing the heating operation at an oscillation frequency that exhibits the minimum reflected power in the frequency sweep operation. The microwave heating method according to the tenth aspect structured in this manner can surely prevent the microwave generating part from being destroyed by the reflected power, and to heat the heating-target portion inside the heating chamber at high heating efficiency.

The microwave heating method according to an eleventh aspect of the present invention further includes, based on the tenth aspect:
prior to start of the heating operation to the object to be heated in the heating chamber,
executing the frequency sweep operation of the prescribed frequency band with the frequency sweep power, to determine an oscillation frequency at which a reflection ratio of the reflected power to the supply power assumes a minimum value; and
adjusting, in accordance with the minimum reflected power at the determined oscillation frequency, the feeding power supplied to the power feeding part. The microwave heating method according to the eleventh aspect structured in this manner can reduce the heating output when the reflected power is great; conversely, can increase the heating output when the reflected power is small, to carry out heating with the rated output. Accordingly, with the microwave heating method according to the eleventh aspect, the semiconductor elements used for the power amplifier part being the power unit is prevented from being destroyed by the reflected energy of the reflected power during the heating operation without the necessity of using an isolator.

The microwave heating method according to a twelfth aspect of the present invention further includes, based on the tenth aspect,
prior to start of the heating operation to the object to be heated in the heating chamber, executing the frequency sweep operation of the prescribed frequency band with the frequency sweep power, to determine an oscillation frequency at which the reflected power detected by the power detecting part becomes minimum;
posterior to start of the heating operation at the determined oscillation frequency, interrupting the heating operation and executing the frequency sweep operation, to redetermine the oscillation frequency at which the reflected power detected by the power detecting part becomes minimum; and
transitioning to the heating operation at the redetermined oscillation frequency. The microwave heating method according to the twelfth aspect structured in this manner can increase the heating output when the reflection ratio is small, to heat with the rated output; conversely, it can reduce the heating output when the reflection ratio is great. Accordingly, it becomes possible to prevent the semiconductor elements of the power amplifier part being the power unit from being destroyed by the reflected energy during the heating operation without the necessity of using an isolator.

In the microwave heating method according to a thirteenth aspect of the present invention, based on the twelfth aspect,
the heating operation and a heating operation stop of interrupting the heating operation and executing the frequency sweep operation may repetitively be performed at preset time intervals. With the microwave heating method according to the thirteenth aspect structured in this manner, even in a case where the impedance of the heating chamber greatly varies due to the state of the object to be heated, for example, thawing of the object to be heated, the optimum oscillation frequency is set every lapse of a prescribed time. Therefore, a highly efficient heating operation can be realized in accordance with the state of the object to be heated.

In the microwave heating method according to a fourteenth aspect of the present invention, based on the twelfth aspect,
posterior to start of the heating operation, a heating operation stop of interrupting the heating operation and executing the frequency sweep operation may be performed, when the reflected power detected by the power detecting part becomes equal to or more than a predetermined threshold value. With the microwave heating method according to the fourteenth aspect structured in this manner, even in a case where the impedance of the heating chamber greatly varies in accordance with the state of the object to be heated and the reflected power becomes great, the optimum oscillation frequency is set again during the heating operation stop. Therefore, a highly efficient heating operation can be realized in accordance with the state of the object to be heated.

In the microwave heating method according to a fifteenth aspect of the present invention, based on the twelfth aspect,
the heating operation may be interrupted and the frequency sweep operation may be executed, when the reflected power detected by the power detecting part fails to become equal to or more than the threshold value within a preset time. The microwave heating method according to the fifteenth aspect stops the heating operation and sets the optimum oscillation frequency again even in a case where the reflected power does not become equal to or more than the threshold value during the heating operation. Therefore, it becomes possible to realize a highly efficient heating operation in accordance with the state of the object to be heated.

### Advantageous Effects of Invention

According to the present invention, it becomes possible to provide a microwave heating device and a microwave heating method with which an operation condition for achieving the minimum reflected power can be searched for by the frequency sweep operation, to surely prevent the microwave generating part from being destroyed by the reflected energy by excessively great reflected power during the heating operation, and with which high heating efficiency can be realized.

### Brief Description of Drawings

Fig. 1 is a block diagram showing the main structure of power feeding routes in a microwave heating device according to Embodiment 1 of the present invention.
Fig. 2 is a block diagram showing the structure of a power amplifier part in the microwave heating device according to Embodiment 1 of the present invention.
Fig. 3 is a diagram showing the schematic structure of the microwave heating device according to Embodiment 1 of the present invention.
Fig. 4 is a graph showing variations in a reflection ratio of a reflected voltage (reflected wave) of a supply voltage (transmitting wave) in an allowable frequency band in the microwave heating device.
Fig. 5 is an explanatory diagram showing the process of the heating operation in the microwave heating device according to Embodiment 1 of the present invention.
Fig. 6 is a graph showing the frequency characteristic curve as to the reflection ratio detected in the minimum ratio searching operation by the microwave heating device according to Embodiment 1 of the present invention.
Fig. 7 is a block diagram showing the main structure of power feeding routes in a microwave heating device according to Embodiment 2 of the present invention.
Fig. 8 is a block diagram showing the main structure of power feeding routes in a microwave heating device according to Embodiment 3 of the present invention.
Fig. 9 is a block diagram showing the main structure of power feeding routes in a microwave heating device according to Embodiment 4 of the present invention.
Fig. 10 is a graph showing one example of a frequency characteristic curve of the reflected power detected by a power detecting part in the microwave heating device according to Embodiment 4 in the present invention.
Fig. 11 is a block diagram showing the main structure of a power feeding routes in a microwave heating device according to Embodiment 5 of the present invention.

### Description of Embodiments

In the following, with reference to the accompanying drawings, a description will be given of a microwave oven as embodiments of a microwave heating device of the present invention. It should be noted that, the microwave heating device of the present invention is not limited to the structure of the microwave oven described in each of the following embodiments, but includes any microwave heating device structured based on a technical idea equivalent to the technical idea described in each of the following embodiments and the common general technical knowledge in the present technical field.

### (Embodiment 1)

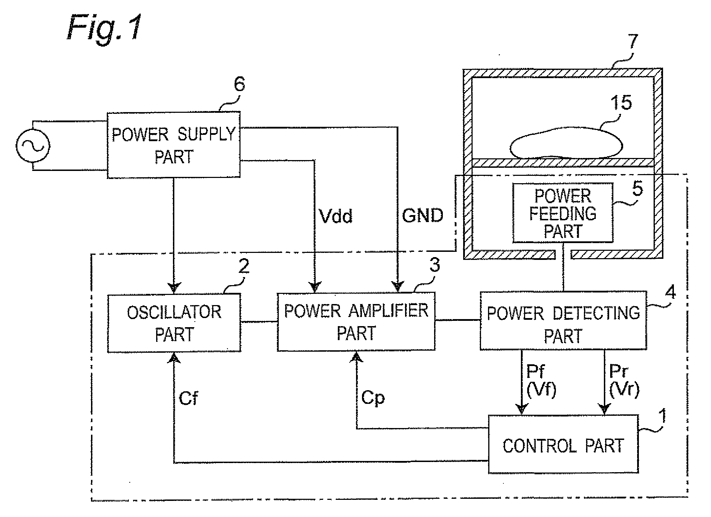

Fig. 1 is a block diagram showing the main structure of power feeding routes in a microwave oven as a microwave heating device according to Embodiment 1 of the present invention. In Fig. 1, an oscillator part 2 that is structured by using a semiconductor element outputs a signal of an oscillation frequency within a prescribed frequency band (e.g., 2400 MHz to 2500 MHz). A power amplifier part 3 being a power unit is structured with a plurality of semiconductor elements having a function of amplifying microwave power from the oscillator part 2.

The oscillator part 2 and the power amplifier part 3 are in a power flow of a microwave frequency band. Here, the power output from the oscillator part 2 is relatively small. The power provided from the oscillator part 2 to the power amplifier part 3 is of small power, i.e., some mW or less. The power is amplified by the power amplifier part 3. Hence, the power of approximately 1000 W can be supplied to a power feeding part 5 being an antenna via a power detecting part 4.

The power detecting part 4 transmits the microwave output from the power amplifier part 3 and supplies it to the power feeding part 5, and detects the transmitted power that transmitted through the power detecting part 4. The transmitted power is the supply power of an incident wave radiated from the power feeding part 5 into a heating chamber 7. Also, the power detecting part 4 detects the reflected power of the reflected wave that returns to the power amplifier part 3 via the power feeding part 5 from the heating chamber side. Thus, the power detecting part 4 detects a supply power signal Pf supplied to the power feeding part 5, and a reflected power signal Pr received by the power feeding part 5 from the heating chamber side. A power supply part 6 is structured with a so-called insulated type AC-DC converter, and forms a supply voltage Vdd to be supplied to the power amplifier part 3 and an earth line GND.

A control part 1 receives the supply power signal Pf and the reflected power signal Pr from the power detecting part 4, to calculate a reflection ratio (Pr/Pf) of the reflected power signal Pr to the supply power signal Pf. Further, based on the calculation result of the reflection ratio (Pr/Pf), the control part 1 outputs a frequency control signal Cf, which varies the frequency of the oscillator part 2, to the oscillator part 2, and outputs a power control signal Cp, which varies output power, to the power amplifier part 3. It is to be noted that, in connection with the microwave heating device according to Embodiment 1, the description will be given taking up an example in which, as the reflection ratio (Pr/Pf) between the supply power signal Pf and the reflected power signal Pr, a supply voltage Vf with the supply power signal Pf and a reflected voltage Vr with the reflected power signal Pr are detected, and the ratio (Vr/Vf) between them is calculated as the reflection ratio, and then the frequency control signal Cf for the oscillator part 2 and the power control signal Cp for the power amplifier part 3 are formed. A detailed description of the power amplifier part 3 will be given later with reference to other drawings. The power feeding part 5 is an antenna for radiating a microwave, and it supplies the microwave power amplified by the power amplifier part 3 into the heating chamber 7.

In the microwave heating device according to Embodiment 1, as described above, the microwave amplified by the power amplifier part 3 propagates through the power detecting part 4, and radiated from the power feeding part 5 into the heating chamber 7. In the microwave heating device according to Embodiment 1, the power feeding part 5 being an antenna is disposed at the bottom of the heating chamber 7, and the power detecting part 4 is disposed on the bottom side and externally to the heating chamber 7. The power detecting part 4 and the power feeding part 5 are coupled to each other through an opening of a small diameter formed at the bottom of the heating chamber 7.
A microwave generating part 20 in the microwave heating device according to Embodiment 1 includes the control part 1, the oscillator part 2, the power amplifier part 3, the power detecting part 4, and the power feeding part 5.

The microwave amplified by the power amplifier part 3 is supplied to the power feeding part 5 being an antenna via the power detecting part 4, and radiated from the power feeding part 5 to the heating chamber 7. The radiated microwave is absorbed by an object 15 to be heated, which is placed on a placement table 16 fixed inside the heating chamber 7, and inductively heats the object 15 to be heated under the heating condition set by the user.

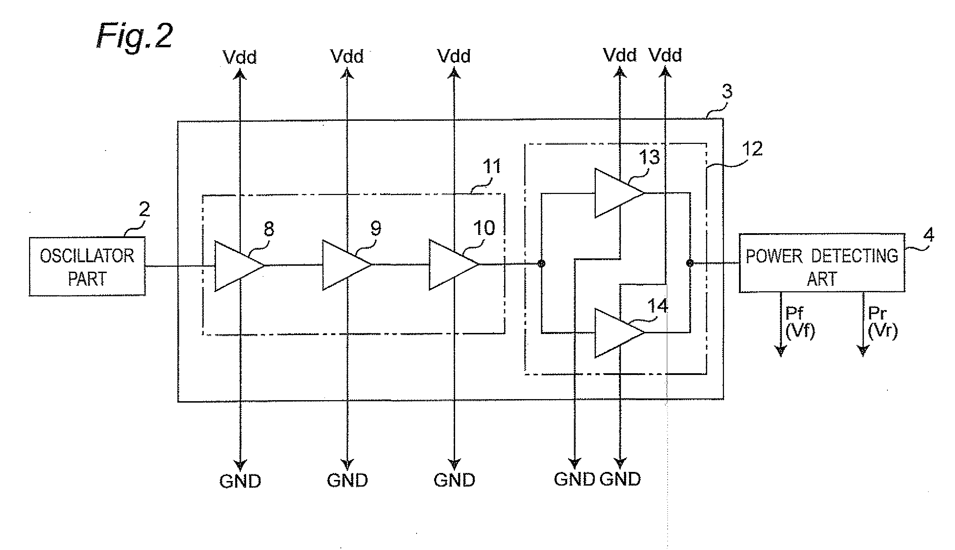

Next, with reference to Fig. 2, a description will be given of the power amplifier part 3 being the power unit of the microwave heating device according to Embodiment 1. Fig. 2 is a block diagram showing the structure of the power amplifier part 3 of the microwave heating device according to Embodiment 1.
The power amplifier part 3 is structured by providing a plurality of semiconductor elements to a circuit employing a conductor pattern formed on one side of a dielectric substrate structured with a low dielectric loss material. The weak microwave output from the oscillator part 2 is amplified by approximately 10 dB at each of a front-stage preamplifier 8, an intermediate-stage preamplifier 9, and a rear-stage preamplifier 10, to become great power of approximately 10 W. The amplifier portion structured with the front-stage preamplifier 8, the intermediate-stage preamplifier 9, and the rear-stage preamplifier 10 is referred to as a driver part 11.

An output part 12 at the rear stage relative to the driver part 11 receives great power (approximately 10 W). In order to amplify this power, the output part 12 is structured with a parallel connection of a first final amplifier 13 and a second final amplifier 14. Since the output part 12 requires the gain of approximately 20 dB, this function is achieved by the parallel connection of the first final amplifier 13 and the second final amplifier 14. In the power amplifier part 3 structured as above, in order to allow the semiconductor elements each being an amplifier element that amplifies the microwave to operate in an excellent manner, a matching circuit is provided on each of the input side and the output side of each semiconductor element.

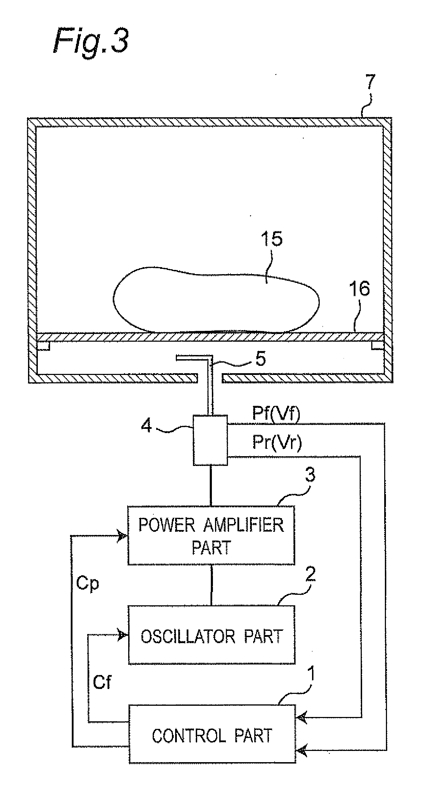

Next, with reference to Fig. 3, a description will be given of the schematic structure of the microwave heating device according to Embodiment 1. Fig. 3 is a diagram showing a schematic structure of the microwave heating device according to Embodiment 1. It is to be noted that, in Fig. 3, the power supply part 6 shown in Fig. 1 is omitted.
As shown in Fig. 3, the microwave heating device according to Embodiment 1 includes a heating chamber 7 having a substantially rectangular parallelepiped structure for accommodating an object 15 to be heated. The heating chamber 7 is structured with: wall plates structuring the ceiling plane, the bottom plane, the left plane, the right plane, and the back plane made of a metal material; an opening-closing door (not shown) for putting in and taking out the object 15 to be heated; and a placement table 16 for placing thereon the object 15 to be heated. With the heating chamber 7 structured in this manner, the microwave supplied into the heating chamber 7 is confined inside the heating chamber 7 by closing the opening-closing door.

Next, a description will be given of a heating operation with the microwave heating device according to Embodiment 1.
In carrying out general microwave heating to the object 15 to be heated, the rated high frequency output falls within a range of approximately 700 W to 1000 W. The microwave heating device according to Embodiment 1 is structured such that the high frequency output as the rated high frequency output is variable in a range from 700 W to 1000 W.

The object 15 to be heated subjected to microwave heating in the heating chamber 7 ranges widely from a light load with a very small moisture content such as popcorn, a middle load being stewed dishes using a casserole, to a heavy load such as a large turkey. Further, it may be used in a no-load state where no object to be heated is present in the heating chamber 7 because of erroneous manipulation of the user. In this manner, the impedance in the heating chamber 7 for the power feeding part 5 varies greatly depending on the usage situation. Further, in a case where frozen foods are thawed or the like, the impedance may approximate the empty state because of low permittivity of ice.

For example, the reflection ratio (Vr/Vf) of the reflected voltage Vr to the supply voltage Vf in the allowable frequency band (e.g., 2400 MHz to 2500 MHz) of the microwave oven varies greatly depending on the type of the load.
Using the microwave oven as the microwave heating device and changing the type of the load, a simulation experiment as to variations in the reflection ratio (Vr/Vf) of the reflected voltage Vr to the supply voltage Vf in the allowable frequency band (2400 MHz to 2500 MHz) was conducted.

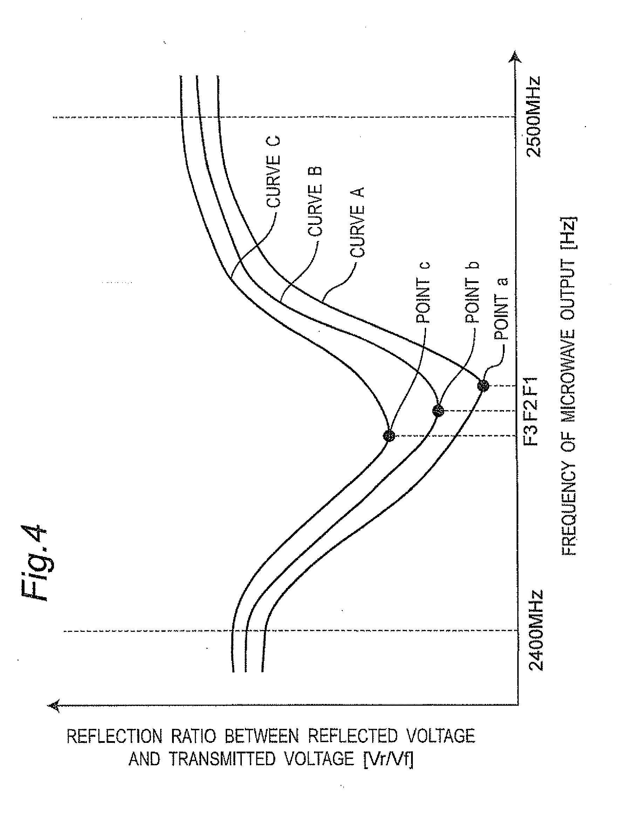

Fig. 4 shows variations in the reflection ratio (Vr/Vf) of the reflected voltage Vr to the supply voltage Vf in the allowable frequency band (2400 MHz to 2500 MHz) of the microwave oven for various loads. In connection with the simulation experiment, a curve A represents an object to be heated corresponding to a load of 500 cc of water as the heavy load, a curve B represents an object to be heated corresponding to a load of 285 cc of water as the middle load, and a curve C represents an object to be heated corresponding to a load of 90 cc of water as the light load. It is to be noted that, in this simulation experiment, the supply power of the microwave to be supplied to the power feeding part 5 by being transmitted through the power detecting part 4 was set to substantially constant small power of 10W. In the allowable frequency band, a frequency sweep operation was carried out, and for every prescribed time, the reflected power was measured at the frequency at that time.

As shown in the graph of Fig. 4, with the reflection ratio (Vr/Vf) in the allowable frequency band, the curve A represents a case where the object to be heated corresponding to a load of 500 cc of water being a relatively heavy load is heated, which is a load the user generally uses. As to the curve A, a point a is the point where the reflection ratio is the smallest, and the frequency of the microwave at the point a is "F1".

Accordingly, it can be seen that, when the object to be heated corresponding to a load of 500 cc of water is heated, choosing "F1" as the frequency output of the oscillator part 2, the microwave energy is highly efficiently absorbed by the object to be heated. Here, the absorption of the microwave energy by the food being the object to be heated is in the maximum state. Further, based on that the reflection ratio (Vr/Vf) is at a minimum, it can be considered that the reflected power to the microwave output at this time is also at a minimum. Increasing the supply power (Pf) to the power feeding part, the reflected power (Pr) occurs in accordance with the reflection ratio. Accordingly, even when a heating operation is carried out with the rated output at the frequency F1, an excessively great thermal stress will not be applied to the semiconductor elements of the power amplifier part 3 by the reflected power. Accordingly, the semiconductor elements will not be destroyed.

Next, a description will be given of a case where the object to be heated corresponding to a load of 285 cc of water being the middle load is heated, which is represented by the curve B in Fig. 4. As to the curve B, a point b is the point where the reflection ratio (Vr/Vf) is at a minimum, and the frequency of the microwave at the point b is "F2". Accordingly, when the object to be heated corresponding to a load of 285 cc of water is heated, choosing "F2" as the frequency output of the oscillator part 2, the microwave energy is highly efficiently absorbed by the object to be heated, and the absorption of the microwave energy into the food being the object to be heated is in the maximum state. Further, based on that the reflection ratio (Vr/Vf) is at a minimum, it can be considered that the reflected power to the microwave output at this time is also at a minimum.

However, as compared to the case where the object to be heated corresponding to a load of 500 cc of water is heated, when the object to be heated corresponding to a load of 285 cc of water is heated, the energy absorption amount is smaller, and the reflected power is greater. Therefore, in the case where the object to be heated corresponding to a load of 285 cc of water is heated, the effect of the reflected energy on the semiconductor elements of the power amplifier part 3 is greater as compared to the case where the object to be heated corresponding to a load of 500 cc of water is heated.

Next, a description will be given of a case where the object to be heated corresponding to a load of 90 cc of water being the light load is heated, which is represented by the curve C in Fig. 4. As to the curve C, a point c is the point where the reflection ratio (Vr/Vf) is at a minimum, and the frequency of the microwave at the point c is "F3". Accordingly, when the object to be heated corresponding to a load of 90 cc of water is heated, choosing "F3" as the frequency output of the oscillator part 2, the microwave energy is highly efficiently absorbed by the object to be heated, and the absorption of the microwave energy into the food being the object to be heated is in the maximum state. Further, based on that the reflection ratio (Vr/Vf) is at a minimum, it can be considered that the reflected power to the microwave output at this time is also at a minimum.

However, as compared to the case where the object to be heated corresponding to a load of 500 cc of water is heated and the case where the object to be heated corresponding to a load of 285 cc of water is heated, when the object to be heated corresponding to a load of 90 cc of water is heated, the energy absorption amount is further smaller, and the reflected power is considerably greater. Therefore, in the case where the object to be heated corresponding to a load of 90 cc of water is heated, the effect of the reflected energy on the semiconductor elements of the power amplifier part 3 is considerably greater as compared to the case where the object to be heated corresponding to a load of 500 cc of water is heated.

As described above, in the cases where the object to be heated corresponding to a load of 285 cc of water is heated and where the object to be heated corresponding to a load of 90 cc of water is heated, even when the frequency at which the reflection ratio (Vr/Vf) is at a minimum is chosen, the reflected energy at the point b on the curve B and that at the point c on the curve C are greater than the reflected energy at the point a on the curve A. Therefore, in a case where the rated high frequency output (e.g., 700 W to 1000 W) is provided to the object to be heated at the chosen frequency (F2 or F3), the semiconductor elements of the power amplifier part 3 may be damaged by the reflected energy by the reflected power, and may be destroyed thereby.

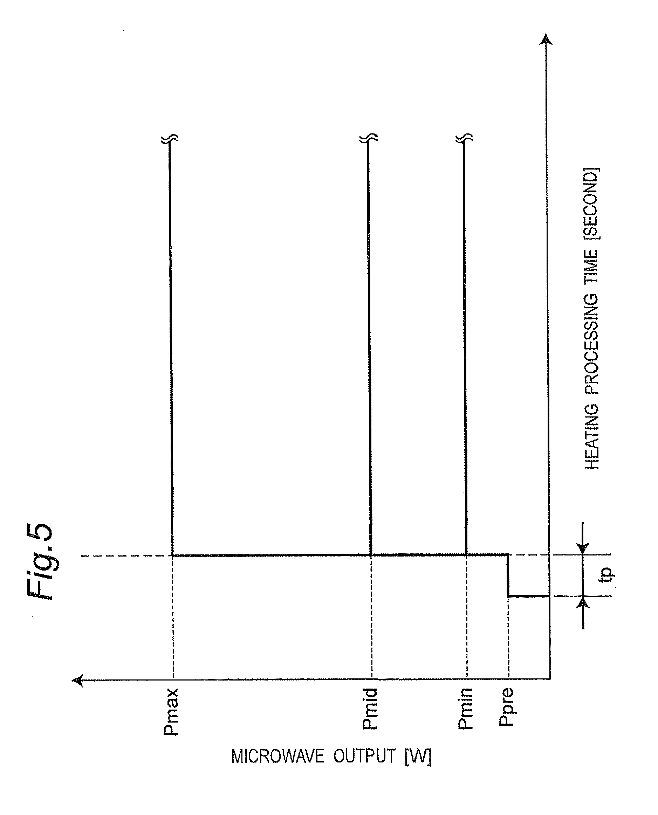

Accordingly, the microwave heating device according to Embodiment 1 of the present invention is configured to heat an object to be heated with an appropriate high frequency output in accordance with the reflection ratio at the chosen oscillation frequency, so as to reduce the effect of the reflected power on the semiconductor elements of the power amplifier part 3. With reference to Fig. 5, a description will be given of means for heating an object to be heated with an appropriate high frequency output in accordance with the chosen oscillation frequency with the microwave heating device according to Embodiment 1. Fig. 5 is an explanatory diagram showing the process of a heating operation with the microwave heating device according to Embodiment 1. In Fig. 5, the vertical axis indicates the microwave output [W], and the horizontal axis indicates the heating processing time [second] of the microwave heating device.

When the user presses the start key for the heating operation of the microwave heating device according to Embodiment 1, the heating operation is started. When the heating operation is started, the microwave output is set to a weak output (frequency sweep power, e.g., 10 W), which is the first output "Ppre". The first output "Ppre" is chosen to be such a small power that even 100% of the supply power (Pf) is returned as the reflected power (Pr), the semiconductor elements of the power amplifier part 3 will not be damaged and destroyed by the reflected energy. During a search period tp where the first output "Ppre" is output, variations in the reflection ratio of the reflected voltage (Vr) to the supply voltage (Vf) in the allowable frequency band (2400 MHz to 2500 MHz) are detected, and the value where the reflection ratio is at a minimum is detected.

In connection with the microwave heating device according to Embodiment 1, the frequency sweep operation of detecting the value where the reflection ratio of the reflected voltage (Vr) to the supply voltage (Vf) assumes the minimum value is referred to as a minimum ratio searching operation. It is to be noted that, in connection with the microwave heating device according to Embodiment 1, the description will be given taking up an example of performing the minimum ratio searching operation of detecting the value with which the reflection ratio of the reflected voltage (Vr) to the supply voltage (Vf) assumes the minimum value. However, the present invention includes a structure of performing a minimum ratio searching operation of detecting the value with which the reflection ratio of the reflected power (Pr) to the supply power (Pf) assumes the minimum value, which can be implemented by the similar structure.

The minimum ratio searching operation is started by the user pressing the start key for the heating operation, and ends within the search period tp. The minimum ratio searching operation is performed every certain frequency for the microwave of frequencies ranging from the minimum frequency (e.g., 2400 MHz) to the maximum frequency (e.g., 2500 MHz) of the detection target frequency band. Here, the supply voltage (Vf) supplied from the power detecting part 4 to the power feeding part 5 and the reflected voltage (Vr) received by the power detecting part 4 from the heating chamber side via the power feeding part 5 is successively detected. Based on the reflection ratio detected in the minimum ratio searching operation, the oscillation frequency that showed the minimum reflection ratio value is detected. It is to be noted that, though the description has been given of the example where the minimum ratio searching operation is performed in the single direction, i.e., from the minimum frequency to the maximum frequency in the detection target frequency band, it may be performed in the single direction from the maximum frequency to the minimum frequency in the detection target frequency band, or may be performed in a reciprocating operation.

The minimum reflection ratio (Vr/Vf) detected in the minimum ratio searching operation is compared by the control part 1 against a preset first threshold value (T1) and a preset second threshold value (T2). Here, the first threshold value (T1) is set to a value smaller than the second threshold value (T2) (T1 < T2).
When the minimum reflection ratio detected in the minimum ratio searching operation is a value smaller than the first threshold value (T1), even when an actual heating operation is performed at the rated high frequency output at the oscillation frequency at which the minimum reflection ratio is obtained, the reflected energy of the reflected power produced at that time is of the magnitude with which the semiconductor elements of the power amplifier part 3 will not be destroyed. Therefore, in the microwave heating device, the control part 1 exerts control by sending the power control signal Cp such that the power amplifier part 3 outputs a first rated high frequency output (Pmax).

Further, when the minimum reflection ratio (Vr/Vf) detected in the minimum ratio searching operation for the search period tp is equal to or more than the first threshold value (T1) and less than the second threshold value (T2), the control part 1 exerts control such that the power amplifier part 3 outputs a second rated high frequency output (Pmid, e.g., 850 W) which is lower than the first rated high frequency output (Pmax, e.g., 1000 W). The second rated high frequency output (Pmid) with which the output of the power amplifier part 3 is controlled is set to a small value equal to or less than the destruction limit taking into consideration of the reflection ratio at that time, such that the semiconductor elements of the power amplifier 4 will not be destroyed by the reflected energy produced at that time. Accordingly, even when the heating operation to the object to be heated is performed at the second rated high frequency output (Pmid), the semiconductor elements of the power amplifier part 3 will not be destroyed by the reflected energy produced at that time.

Further, when the minimum reflection ratio (Vr/Vf) detected in the minimum ratio searching operation for the search period tp is equal to or more than the second threshold value (T2), the control part 1 exerts control such that the power amplifier part 3 outputs a third rated high frequency output (Pmin, e.g., 700 W) which is further lower than the second rated high frequency output (Pmid). The third rated high frequency output (Pmin) with which the output of the power amplifier part 3 is controlled is set to a small value equal to or less than the destruction limit taking into consideration of the reflection ratio at that time, such that the semiconductor elements of the power amplifier part 3 will not be destroyed by the reflected energy produced at that time. Accordingly, even when the heating operation to the object to be heated is performed at the third rated high frequency output (Pmin), the semiconductor elements of the power amplifier part 3 will not be destroyed by the reflected energy produced at that time.

It is to be noted that, in connection with the microwave heating device according to Embodiment 1, though the description has been given taking up an example where two threshold values (T1, T2) are used and the desired rated high frequency output is selected out of the three rated high frequency outputs (Pmax, Pmid, Pmin), the present invention is not limited to this example. The present invention may be configured to employ a plurality of threshold values and to select out of a plurality of rated high frequency outputs.

Further, the microwave heating device according to Embodiment 1 is set taking into consideration of the safety of the device such that the semiconductor elements of the power amplifier part 3 will not be destroyed by the reflected energy, even in a case where the high frequency output is set under the heating condition set by the user. That is, even in a case where the user sets a greatly high frequency output, when the reflection ratio for the object to be heated at that time is poor, it is set to the greatest high frequency output in a range where the reflected energy does not disadvantageously affect the semiconductor elements.

Next, a description will be given of the minimum ratio searching operation with the microwave heating device according to Embodiment 1. The minimum ratio searching operation as used herein is referred to as a pre-search, in which the supply power Pf (supply voltage Vf) and the reflected power Pr (reflected voltage Vr) is sweep-measured every certain frequency in an allowable frequency band (2400 to 2500 MHz), to calculate the reflection ratio Pr/Pf (Vr/Vf). Based on the calculation result, the minimum reflection ratio is obtained, and the oscillation frequency at that time is set.

In determining the heating purpose microwave output, as described above, a table representing the relationship between the value of the minimum reflection ratio Pr/Pf (Vr/Vf) and the high frequency output is previously set using threshold values, and an appropriate high frequency output in accordance with the value of the detected minimum reflection ratio Pr/Pf (Vr/Vf) is calculated based on the table. The object to be heated is heated with the calculated high frequency output, to achieve optimization.

Further, in setting the heating purpose microwave output, optimization may be achieved by a method including: previously setting a heating output function employing the value of the minimum reflection ratio Pr/Pf (Vr/Vf) as a factor; substituting the detected value of the minimum reflection ratio Pr/Pf (Vr/Vf) into the function to calculate the high frequency output; and heating the object to be heated with the calculated high frequency output. This optimization method is carried out by the control part 1. Since it involves many operations and the like, it is desirable to employ a microcomputer.

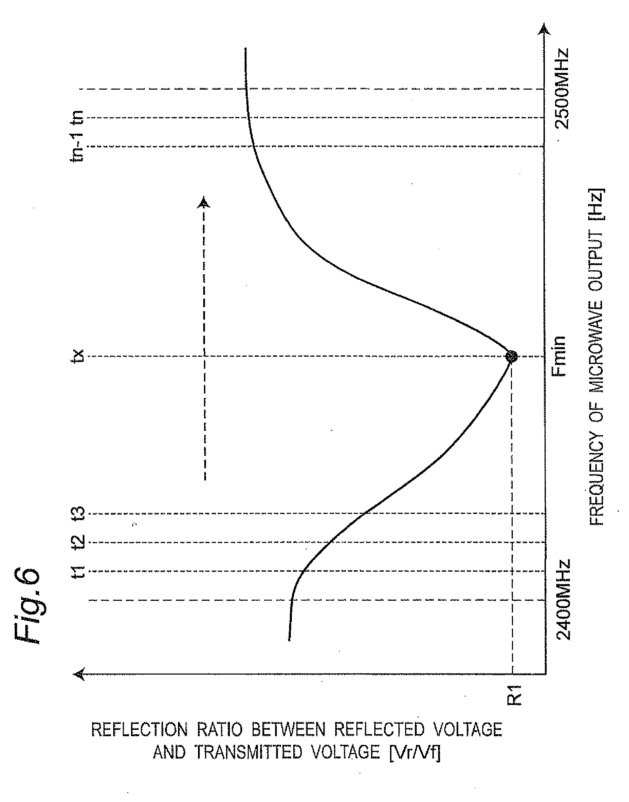

Next, with reference to Fig. 6, a description will be given of a method of the pre-search, which is the minimum ratio searching operation with the microwave heating device according to Embodiment 1. Fig. 6 is a graph showing the frequency characteristic curve as to the reflection ratio detected in the minimum ratio searching operation with the microwave heating device according to Embodiment 1.

With the microwave heating device according to Embodiment 1, the frequency sweep operation (sweep operation) is automatically performed with the starting point of the minimum frequency 2400 MHz and with the final point of the maximum frequency 2500 MHz in the allowable frequency band (2400 to 2500 MHz). In the sweep operation, every preset certain incremental time (t1, t2, ..., tx, ..., tn), the supply power (supply voltage) and the reflected power (reflected voltage) are measured, and the value of the reflection ratio Pr/Pf (Vr/Vf) is successively calculated. In this manner, since the supply power (supply voltage) and the reflected power (reflected voltage) are measured every certain time in the frequency sweep operation, the value of the reflection ratio Pr/Pf (Vr/Vf) of every certain frequency from the minimum frequency 2400 MHz is calculated. In this manner, in the frequency sweep operation, for every certain incremental time (t1, t2, ..., tx, ..., tn-1, tn), the value of the reflection ratio Pr/Pf (Vr/Vf) is successively calculated. When the value of the reflection ratio Pr/Pf (Vr/Vf) is calculated at the time tn where the frequency becomes closest to 2500 MHz being the final point, the minimum ratio searching operation ends.

It is to be noted that, the incremental time (Δt) being the measurement interval is constant, and the minimum ratio searching operation is performed for n times in the search period tp. Therefore, one measurement time is tp/n. In the minimum ratio searching operation, the frequency and the value of the reflection ratio Pr / Pf (Vr/Vf) are stored in storage means provided at the control part 1.

As represented by the frequency characteristic curve in Fig. 6, the frequency Fmin where the reflection ratio (Vr/Vf) is at a minimum at the time point tx is detected, and a value R1 of the reflection ratio (Vr/Vf) is acquired. Based on the acquired value R1 of the reflection ratio (Vr/Vf), the heating purpose microwave output is obtained as described above. Obtaining the microwave output in this manner and achieving optimization, the semiconductor elements can be prevented from being destroyed without the necessity of using any isolator, and a highly reliable microwave heating device can be provided.

### (Embodiment 2)

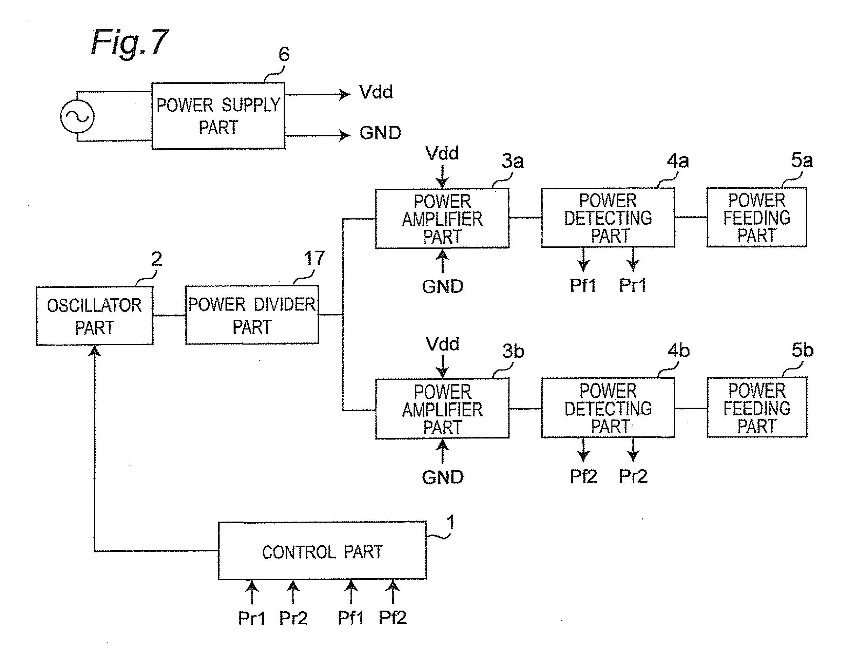

In the following, with reference to Fig. 7, a description will be given of a microwave heating device according to Embodiment 2 of the present invention. Fig. 7 is a block diagram showing the main structure of power feeding routes in the microwave heating device according to Embodiment 2 of the present invention.

As shown in Fig. 7, the microwave heating device according to Embodiment 2 includes a power divider part 17 at the rear stage relative to an oscillator part 2. In the microwave heating device according to Embodiment 2, the power divider part 17 divides a signal in the bandwidth of 2400 MHz to 2500 MHz from the oscillator part 2 to power amplifier parts 3a and 3b being a plurality of power units. The microwaves amplified by the power amplifier parts 3a and 3b pass via respective power detecting parts 4a and 4b, and from a plurality of power feeding parts 5a and 5b, the microwaves are radiated into the heating chamber.

Since the power amplified by the power amplifier part being one power unit is limited, the microwave heating device according to Embodiment 2 is configured to use the plurality of power amplifier parts for amplifying power to the desired power, and to supply the power feeding parts with the same. Accordingly, the microwave heating device according to Embodiment 2 is intended to reduce the power handled by each power amplifier part being one power unit, and to spatially compounding the microwaves amplified by the plurality of power amplifier parts at the heating chamber to thereby obtain the desired microwave output.

The power divider part 17 used in the microwave heating device according to Embodiment 2 is arranged at the rear stage relative to the oscillator part in the small-power system. The power divider part 17 may be an in-phase divider such as the Wilkinson power divider with which no phase difference occurs between the outputs. Alternatively, it may be a divider such as a branch-line power divider and a rat-race power divider with which a phase difference occurs between the outputs.

Further, the power divider part 17 propagates the power substantially half (1/2) as great as the high-frequency power of the microwave received from the oscillator part 2 to each of the power amplifier parts 3a and 3b. The microwave power amplified by each of the power amplifier parts 3a and 3b passes through the respective power detecting parts 4a and 4b and is transmitted to the respective power feeding parts 5a and 5b. In this manner, in the microwave heating device according to Embodiment 2, the microwave power is transmitted through two lines following the power divider part 17.

As described above, with the structure in which the plurality of power units are used to feed the power from the antennas being the plurality of power feeding parts to the heating chamber, it becomes possible to dispose the power feeding parts in a dispersed manner on a plurality of wall surfaces structuring the heating chamber. In this manner, it becomes possible to dispose the plurality of power feeding parts in a dispersed manner to the heating chamber. Therefore, it becomes possible to effectively use the gap space between a casing structuring the appearance of the device and the heating chamber inside the casing, to efficiently dispose the plurality of power feeding parts in the gap space. As a result, the microwave heating device according to Embodiment 2 can be structured to have a large heating chamber despite its compact appearance. Therefore, it becomes possible to provide a microwave heating device having a compact and large capacity heating chamber, e.g., a microwave oven.

In connection with the microwave heating device according to Embodiment 2, though the description has been given taking up an example where the power feeding route is provided in two lines, the present invention is not limited to this example. It is possible to employ a cascade structure in which a power divider part is further provided at the rear stage relative to the power divider part 17, or to structure the power divider part 17 with a multi-branch type power divider circuit that divides power into three or more systems, to thereby achieve a structure with four power feeding parts or eight power feeding parts, for example. Thus, by increasing the number of power division at the power divider part, the power handled at each power amplifier part being the power unit becomes further smaller, and the power handled by the output part (see the output part 12 in Fig. 2) of the power amplifier part also becomes smaller. As a result, the heat generating amount of the power amplifier part is suppressed, which advantageously facilitates the heat dissipation design of the power amplifier part.

### (Embodiment 3)

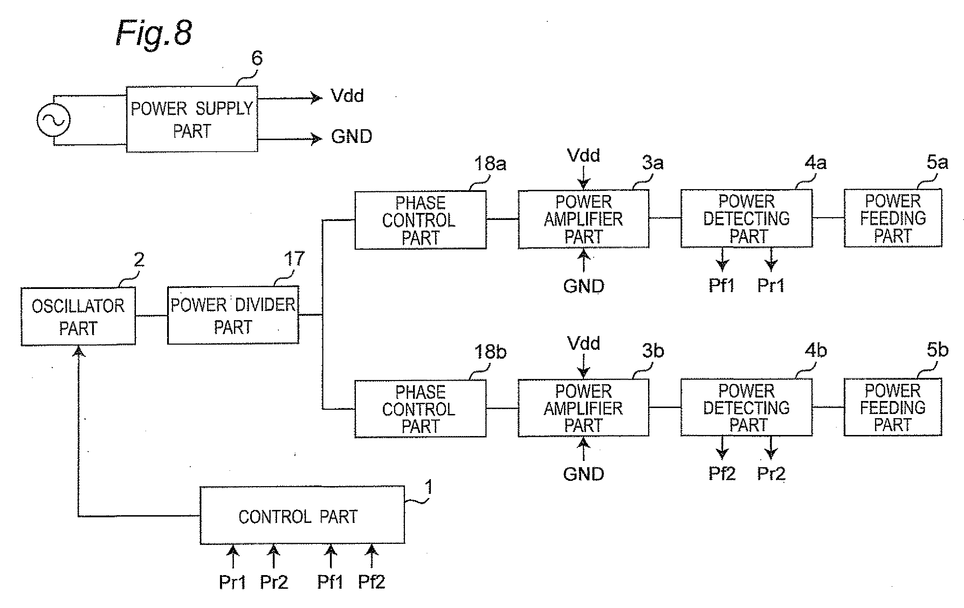

In the following, with reference to Fig. 8, a description will be given of a microwave heating device according to Embodiment 3 of the present invention. Fig. 8 is a block diagram showing the main structure of power feeding routes in the microwave heating device according to Embodiment 3 of the present invention.
As shown in Fig. 8, the microwave heating device according to Embodiment 3 is provided with phase control parts 18a and 18b respectively disposed in the power routes divided by a power divider part 17. With the microwave heating device according to Embodiment 3, the phase control parts 18a and 18b are employed in the respective power feeding routes, such that the phase of each of the power feeding part routes can be changed.

It is to be noted that, the transmission operation of the microwave power from an oscillator part 2 to the power divider part 17, and the microwave power transmitting operation by power amplifier parts 3a and 3b, power detecting parts 4a and 4b, and power feeding parts 5a and 5b, disposed at the rear stages of the phase control parts 18a and 18b in the power feeding routes, respectively, are the same as the transmission operation in the microwave heating device according to Embodiment 2. Therefore, the description thereof is omitted from the description as to Embodiment 3.

The phase control parts 18a and 18b used in the microwave heating device according to Embodiment 3 are each structured using a capacitance variable element whose capacitance varies in accordance with the applied voltage. The phase variable range of each of the phase control parts 18a and 18b is from 0 degrees to approximately 180 degrees. Thus, the phase difference between the microwave power output from the phase control part 18a and that output from the phase control part 18b can be controlled within the range from 0 degrees to ± 180 degrees.

Varying the phase difference between the power feeding parts using the phase control parts 18a and 18b in the power feeding routes, the electromagnetic field distribution formed between the power feeding parts in the heating chamber can be freely formed. Accordingly, since the microwave heating device according to Embodiment 3 is capable of selectively heating a particular part in the object to be heated in the heating chamber, it becomes possible to detect the heated state of the object to be heated, to realize heat finishing being free of uneven heating.

### (Embodiment 4)

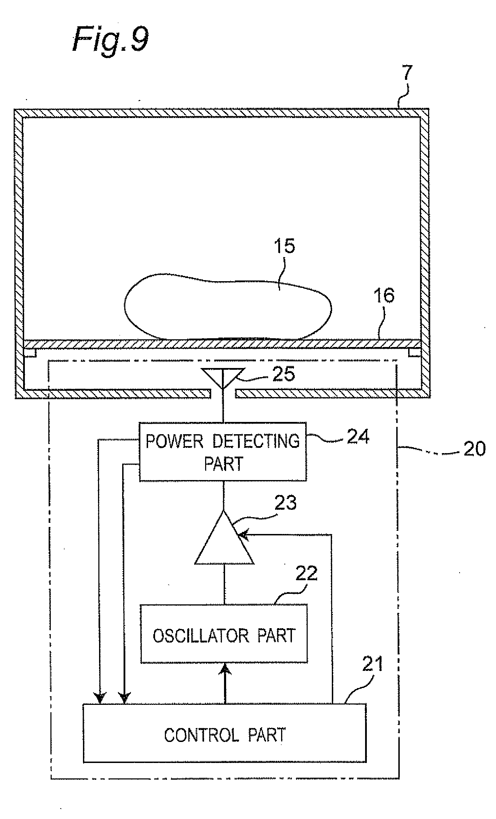

In the following, with reference to Fig. 9, a description will be given of a microwave heating device according to Embodiment 4 of the present invention. Fig. 9 is a block diagram showing the main structure of power feeding routes of the microwave heating device according to Embodiment 4 of the present invention.

In Fig. 9, a microwave generating part 20 at the power feeding routes is structured to include: an oscillator part 22 structured using a semiconductor element; a power amplifier part 23 structured using semiconductor elements that amplify the power of the output from the oscillator part 22; a power feeding part 25 being an antenna that radiates the microwave power amplified by the power amplifier part 23 into a heating chamber 7; a power detecting part 24 inserted into a microwave transmission route connecting between the power amplifier part 23 and the power feeding part 25; and a control part 21 controlling the oscillator part 22 and the power amplifier part 23. The power detecting part 24 detects the reflected power that is reflected off from the heating chamber side via the power feeding part 25 to the power amplifier part 21, and the supply power supplied from the power amplifier part 23 to the power feeding part 25. The control part 21 is configured to control the oscillator part 22 and the power amplifier part 23, based on the supply power and the reflected power detected by a power detecting part 6.

The microwave heating device according to Embodiment 4 includes, similarly to Embodiments 1 to 3, the heating chamber 7 having a substantially rectangular parallelepiped structure for accommodating an object 15 to be heated. The heating chamber 7 is structured with: wall plates structuring the ceiling plane, the bottom plane, the left plane, the right plane, and the back plane made of a metal material; an opening-closing door (not shown) for putting in and taking out the object 15 to be heated; and a placement table 16 for placing thereon the object 15 to be heated. With the heating chamber 7 structured in this manner, the microwave supplied into the heating chamber is confined inside the heating chamber by closing the opening-closing door.

In the microwave generating part 20, the microwave from the oscillator part 22 is amplified at the power amplifier part 23, and is transmitted to the power feeding part 25 being an antenna via the power detecting part 24. The microwave is radiated from the power feeding part 25 into the heating chamber 7. The power feeding part 25 radiating and supplying the microwave into the heating chamber 7 is disposed at the wall surface structuring the heating chamber 7. In the microwave heating device according to Embodiment 4, the power feeding part 25 is disposed at the bottom of the heating chamber 7. In connection with the microwave heating device according to Embodiment 4, though the description will be given taking up an example in which the power feeding part 25 is disposed at the bottom, the present invention is not limited thereto. The power feeding part 25 may be disposed at any wall surface structuring the heating chamber 7, and can be changed in accordance with the specification of the microwave heating device.

The microwave generating part 20 is structured by providing a plurality of semiconductor elements to a circuit employing a conductor pattern formed on one side of a dielectric substrate structured with a low dielectric loss material. In the power amplifier part 23, in order to allow the semiconductor elements each being the amplifier element that amplifies the microwave to operate in an excellent manner, a matching circuit is provided on each of the input side and the output side of each semiconductor element.

The microwave transmission routes connecting the functional blocks in the microwave generating part 20 to one another form a transmission circuit whose characteristic impedance is approximately 50 Ω by the conductor pattern provided on one side of the dielectric substrate.

Further, the power detecting part 24 is to extract the reflected power transmitted from the heating chamber 7 to the power amplifier part 23 side, i.e., what is called a reflected wave, and to extract the supply power transmitted from the power amplifier part 23 to the heating chamber 7, i.e., what is called the power of an incident wave. In connection with the power detecting part 24, the power coupling factor is, e.g., approximately - 40 dB, and the power amount approximately as 1/10000 as great as the reflected power and the incident power (supply power) is extracted.

The power signals extracted in this manner are each rectified by a detector diode (not shown), and smoothed by a capacitor (not shown). The smoothed signals are received by the control part 21.

Based on the heating condition of the object 15 to be heated that the user directly inputs, heating information obtained from the heated state of the object 15 to be heated undergoing a heating process, and sense information detected by the power detecting part 24, the control part 21 controls the drive power supplied to each of the oscillator part 22 and the power amplifier part 23 being the constituents of the microwave generating part 20. As a result, the object 15 accommodated in the heating chamber 7 is optimally heated based on the heating condition set by the user, the heated state of the object 15 to be heated undergoing a heating process, or the sense information from the power detecting part 24.

It is to be noted that, in connection with the microwave heating device according to Embodiment 4, the microwave generating part 20 is provided with heat dissipation means, such as a cooling fin (not shown), for dissipating the heat chiefly generated by the semiconductor elements provided to the power amplifier part 3.

As described in the section of BACKGROUND ART, in connection with the microwave heating device, the electric characteristic of the heating chamber including the object to be heated is determined by many conditions such as the type, shape, and amount of the object to be heated, and by the position of the object to be heated in the heating chamber, and the reflected power transmitted from the heating chamber side to the microwave generating part side is generated based on the output impedance of the microwave generating part and the impedance of the heating chamber. Therefore, the electric characteristic of the heating chamber is always different, and hence, the reflected power transmitted from the heating chamber side to the microwave generating part side constantly varies.

Further, the frequency at which the microwave can be absorbed by the object to be heated most efficiently varies depending also on the state of the object to be heated in the heating chamber.
When the object to be heated is in a frozen state, thawing proceeds in accordance with the heating operation. Then, the object to be heated enters a state where it is partially thawed. Since the impedance to the microwave greatly differs between ice and water, the impedance of the heating chamber for the power feeding part greatly changes as compared to that at the initial stage of heating. As a result, the frequency that can allow the microwave to be absorbed by the object to be heated assumes different values between the initial stage of heating and the state after the ice has molten. Accordingly, when the heating operation is continued at the frequency selected in the frozen state before the heating operation, an increase in the reflected power and in the heat generating amount of the power amplifier part may be invited, and the heating efficiency may be impaired. Further, the reflected energy of the reflected power at this time may disadvantageously affect the semiconductor elements of the power amplifier part. Therefore, in order to improve the heating efficiency, it is required to always select the optimum frequency even during the heating operation, to perform the heating operation.
The microwave heating device according to Embodiment 4 solves such a problem, and is configured to select the optimum frequency even during the heating operation, to perform the heating operation.

Next, a description will be given of an operation of the microwave heating device according to Embodiment 4.
First, the user puts the object 15 to be heated in the heating chamber 7, and inputs the heating condition therefore through a manipulation part (not shown), and presses the start key for the heating operation. When the start key is pressed, a heating start signal is formed, and provided to the control part 21. The control part 21 received the heating start signal forms a control signal, and the microwave generating part 20 starts a microwave generating operation. The control part 21 operates the power supply part (see Fig. 1) to supply the oscillator part 22 with power. At this time, a voltage signal that sets the oscillation frequency at the initial stage of the oscillator part 22 to, e.g., 2400 MHz, is supplied, and the oscillator part 22 starts an oscillation operation.

The control part 21 controls to drive the oscillator part 22, and controls the power supply part to drive the power amplifier part 23.
The microwave power amplified by the power amplifier part 23 is supplied to the power feeding part 25 via the power detecting part 24, and radiated in the heating chamber 7. The power amplifier part 23 at this time outputs the microwave power of less than 100 W, e.g., 50 W.

As described above, when the microwave power supplied into the heating chamber 7 is absorbed by the object 15 to be heated by 100%, the reflected power from the heating chamber 7 becomes zero. However, since the type, shape, amount and position of the object 15 to be heated determine the electric characteristic of the heating chamber 7 including the object 15 to be heated, based on the output impedance of the power feeding part 25 and the impedance of the heating chamber 7, the reflected power transmitted from the heating chamber 7 side to the power feeding part 5 side occurs.

In connection with the microwave heating device according to Embodiment 4, similarly to the microwave heating device according to each of the aforementioned Embodiments, the frequency sweep operation is performed within the allowable frequency band (2400 MHz to 2500 MHz) of the microwave heating device, and the frequency at which the reflected power amount assumes the minimum value is selected.

The power detecting part 24 provided on the power feeding route detects the reflected power transmitted from the heating chamber 7 side to the microwave generating part 20 side, and extracts a detection signal that is proportional to the reflected power amount. The detection signal is sent to the control part 21, and the control part 21 having received the detection signal selects the frequency at which the reflected power amount assumes the minimum value.

The frequency selection operation being the frequency sweep operation by the control part 21 is performed by varying the oscillation frequency of the oscillator part 22 from the initial 2400 MHz by, e.g., 1 MHz pitch, toward the higher frequency side, until 2500 MHz being the upper limit of the frequency variable range is reached.

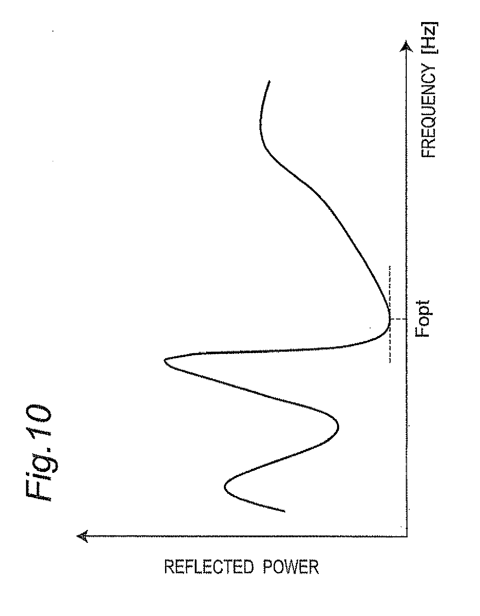

In this manner, by performing the frequency sweep operation within the allowable frequency band (2400 MHz to 2500 MHz), the control part 21 can recognize the varying state of the reflected power of each oscillation frequency output from the oscillator part 22. Fig. 10 is a graph showing one example of the frequency characteristic curve of the reflected power detected by the power detecting part 24.

Based on the frequency characteristic of the detected reflected power, the control part 21 selects the oscillation frequency at which the reflected power is at a minimum (frequency Fopt on the frequency characteristic curve shown in Fig. 10). Further, the control part 21 controls the power amplifier part 23 such that the microwave output corresponds to the heating condition set by the user. As a result, the power amplifier part 23 outputs the microwave power of an appropriate oscillation frequency. Then, the microwave output of the power amplifier part 23 is transmitted to the power feeding part 25 via the power detecting part 24, and radiated in the heating chamber 7.

As described above, the microwave heating device according to Embodiment 4 obtains the optimum condition with which the reflected power becomes minimum, and based on the obtained microwave power, the heating operation is performed. As a result, since the reflected power during the heating operation becomes small, it becomes possible to allow the microwave energy to efficiently be absorbed by the object 15 to be heated, and to shorten the heating time.

However, the state of the object 15 heated by the microwave heating device momentarily varies during the heating operation. In particular, the variation is great when the object 15 to be heated is a frozen food. When the object 15 to be heated is a frozen food, the moisture in the object 15 to be heated before heating is started is in the state of ice, and by radiating the microwave to perform the heating operation, ice in the object 15 to be heated melts and the state transits to the water state.

In consideration of the impedance of ice and that of water to the microwave, the impedance of water is extremely greater than that of ice. Therefore, a great difference is expected between the frequency characteristic being the measurement of the impedance of the heating chamber 7 in which the frozen object 15 to be heated is accommodated and the frequency characteristic being the measurement of the impedance of the heating chamber 7 in which the accommodated object 15 to be heated starts to melt in accordance with the progress of heating. In such a case, in accordance with the progress of the heating operation, the reflected power detected by the power detecting part 24 greatly varies.

Accordingly, in some cases, the reflected power becomes great during the heating operation, and the heating operation at high efficiency cannot be maintained. The microwave heating device according to Embodiment 4 solves this problem.
With the microwave heating device according to Embodiment 4, when the reflected power detected by the power detecting part 24 exceeds a prescribed threshold value, the heating operation is once interrupted, and the frequency selection operation described above is performed.

The frequency selection operation which is executed by the control part 21 by stopping the started heating operation is the same as the frequency selection operation prior to the heating operation. It is started by varying the oscillation frequency of the oscillator part 22 from the initial 2400 MHz by, e.g., 1 MHz pitch, toward the higher frequency side, until 2500 MHz being the upper limit of the frequency variable range is reached. The microwave output at the frequency selection operation is the frequency sweep power (e.g., 50 W) which is lower than the rated supply power which is supplied to the power feeding part 25 at the heating operation.

In this manner, with the microwave heating device according to Embodiment 4, even after the heating operation is started, when the reflected power exceeds a prescribed threshold value, the frequency selection operation can be performed, so as to select the optimum frequency for the heating operation. As a result, since the microwave heating device according to Embodiment 4 always supplies the microwave power of the optimum frequency even during the heating operation, the object to be heated can highly efficiently be subjected to microwave heating.

It is to be noted that, in the microwave heating device according to Embodiment 4, the execution timing of stopping the heating operation and starting the frequency selection operation may be the timing where the reflected power detected by the power detecting part 24 exceeds the threshold value as described above. Alternatively, the control part 21 may interrupt the heating operation after the heating operation elapses for a prescribed time, and execute the frequency selection operation, to select the optimum frequency. By performing the frequency selection operation for a plurality of times every lapse of a prescribed time posterior to start of the heating operation, it becomes possible to carry out microwave heating at an appropriate frequency in accordance with the state of the object to be heated, and a highly efficient heating operation can be performed.

In connection with the microwave heating device according to Embodiment 4, even when the reflected power detected by the power detecting part does not become equal to or more than the threshold value within a preset time, the heating operation may be interrupted and the frequency sweep operation may be executed. In this manner, by performing the frequency sweep operation every prescribed time, an appropriate oscillation frequency in accordance with the state inside the heating chamber including the state of the object to be heated or the like is always set to the microwave heating device. Thus, a highly efficient heating operation can be realized.

In connection with the microwave heating device according to Embodiment 4, though it is configured such that the reflected power is detected by the power detecting part 24, and the optimum oscillation frequency is selected based on the reflected power amount, as has been described in Embodiments 1 to 3, it may be configured such that the power detecting part selects the oscillation frequency using the reflection ratio of the reflected power to the supply power. This configuration makes it possible to select the oscillation frequency at which the microwave energy radiated in the heating chamber is most efficiently absorbed by the object to be heated.

### (Embodiment 5)

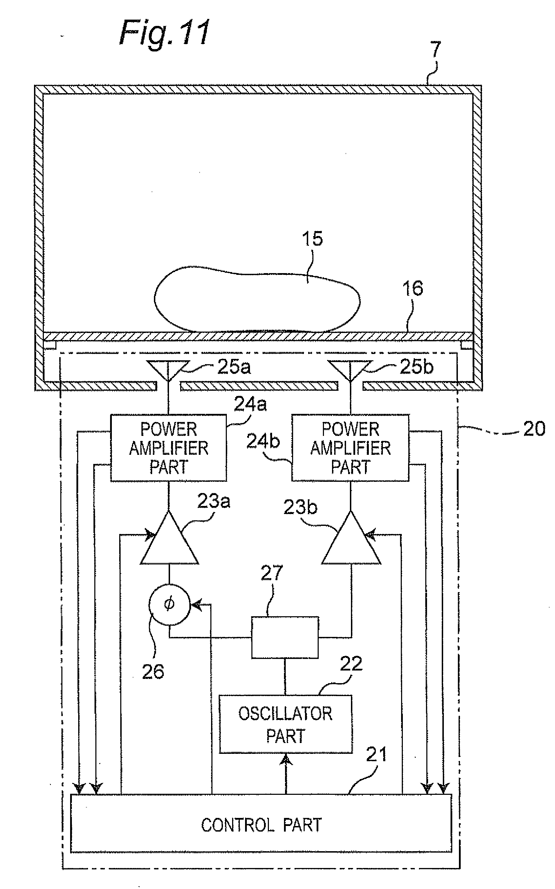

In the following, with reference to Fig. 11, a description will be given of a microwave heating device according to Embodiment 5 of the present invention. Fig. 11 is a block diagram showing the main structure of power feeding routes in the microwave heating device according to Embodiment 5 of the present invention.

The microwave heating device according to Embodiment 5 is different from the microwave heating device according to Embodiment 4 in that the output of an oscillator part 22 is divided by a power divider part 27 into a plurality of outputs, so that a plurality of power feeding routes are provided, and a phase control part 26 is provided on one of the power feeding routes. It is to be noted that, in connection with the microwave heating device according to Embodiment 5, a description will be given taking up an example in which power feeding routes of two systems are provided.

The microwave heating device according to Embodiment 5 is configured such that, provision of the phase control part 26 on one of the power feeding routes from the power divider part 27 makes it possible to control the phase difference of the microwave in one power feeding route. It is to be noted that, similarly to the microwave heating device according to Embodiment 4, the power feeding routes are each provided with a power amplifier part that amplifies microwave power, a power detecting part that detects the supply power and the reflected power, and a power feeding part being an antenna. That is, in the microwave heating device according to Embodiment 5, a power amplifier part 23a or 23b, a power detecting part 24a or 24b, and a power feeding part 25a or 25b are provided at the corresponding power feeding route.

With the microwave heating device according to Embodiment 5, a frequency selection operation for selecting an oscillation frequency for heating prior to start of a heating operation is executed. Since the frequency selection operation is the same as that of the microwave heating device according to Embodiment 4, a detailed description thereof is omitted from the description of Embodiment 5.

In connection with the microwave heating device according to Embodiment 5, since the phase control part 26 is provided to one of the power feeding routes, by controlling the phase of the microwave emitted from the one power feeding part 25a, it becomes possible to control the phase difference between the microwaves of the two systems respectively emitted from the power feeding parts 25a and 25b. Accordingly, the microwave heating device according to Embodiment 5 is capable of varying the interference position of the microwaves between the power feeding parts in the heating chamber 7, and it becomes possible to adjust the position where the electric field becomes intense. Accordingly, since the microwave heating device according to Embodiment 5 can vary the position in the object to be heated where it is to be intensely heated, the heated state of the object to be heated can be evenly finished.

In connection with the microwave heating device according to Embodiment 5, though the description has been given taking up an example in which the power feeding routes are two lines, the present invention is not limited to this example. It is possible to employ a cascade structure in which power divider parts are further provided at the rear stage relative to the power divider part 27, which provides, the structure with four power feeding parts or eight power feeding parts, for example. In this manner, by employing the cascade structure for the power divider part, the power handled at each power amplifier part being the power unit becomes further smaller, and the power handled by the output part of the power amplifier part also becomes smaller. As a result, the heat generating amount of the power amplifier part is suppressed, which advantageously facilitates the heat dissipation design. When a plurality of power feeding routes (at least three power feeding routes) are formed in this manner, provision of a phase control part to each of the power feeding routes makes it possible to adjust the phase of each power feeding route.

As described above, according to the present invention, a microwave heating device and microwave heating method which can surely prevent a microwave generating part from being destroyed by the reflected power, and which can heat a heating-target portion at a high heating efficiency can be provided. It is to be noted that, in order to describe the present invention, the description has been given of the specific structures in connection with the microwave heating device and the microwave heating method according to each of Embodiments 1 to 5. However, the present invention is not limited to such structures, and includes any combinations of the structures, and the technical ideas equivalent to the structures.

### Industrial Applicability

The microwave heating device and microwave heating method of the present invention are capable of preventing the semiconductor elements from being destroyed by the reflected energy even with various objects to be heated, and are capable of performing highly efficient microwave heating. Accordingly, they are widely applicable to a heating device which employs inductive heating, as is represented by a microwave oven, a garbage disposer, a microwave power supply of a plasma power supply being a semiconductor manufacturing device.

### Reference Signs List

- 1: control part
- 2: oscillator part
- 3: power amplifier part
- 4: power detecting part
- 5: power feeding part
- 6: power supply part
- 7: heating chamber
- 8: front-stage preamplifier
- 9: intermediate-stage preamplifier
- 10: rear-stage preamplifier
- 11.: driver part
- 12: output part
- 13: first final amplifier
- 14: second final amplifier
- 15: object to be heated
- 16: placement table

## Claims

1. A microwave heating device, comprising:
a heating chamber that accommodates an object to be heated;
an oscillator part that outputs a signal at an oscillation frequency within a prescribed frequency band;
a power amplifier part that amplifies power of an output of the oscillator part;
a power feeding part that supplies an output of the power amplifier part to the heating chamber;
a power detecting part that detects reflected power reflected from the heating chamber to the power amplifier part via the power feeding part, and supply power supplied from the power amplifier part to the power feeding part, and
a control part that receives a reflected power signal and a supply power signal from the power detecting part, to control the oscillation frequency of the oscillator part and the output of the power amplifier part, wherein
prior to start of a heating operation to an object to be heated in the heating chamber, the control part executes a frequency sweep operation of a prescribed frequency band with frequency sweep power being lower than rated supply power being supplied to the power feeding part when the heating operation is performed, to search for minimum reflected power,
the control part adjusts, in accordance with the minimum reflected power, feeding power to be supplied to the power feeding part when the heating is performed, and
the control part performs the heating operation at an oscillation frequency that exhibits the minimum reflected power in the frequency sweep operation.

2. The microwave heating device according to claim 1, wherein
prior to start of the heating operation to the object to be heated in the heating chamber,
the control part executes the frequency sweep operation of the prescribed frequency band with the frequency sweep power, to determine an oscillation frequency at which a reflection ratio of the reflected power to the supply power assumes a minimum value, and
the control part is configured to adjust the feeding power supplied to the power feeding part, in accordance with the minimum reflected power at the determined oscillation frequency.

3. The microwave heating device according to claim 2, wherein
posterior to start of the heating operation to the object to be heated in the heating chamber,
the control part interrupts the heating operation for a prescribed time, and executes the frequency sweep operation of the prescribed frequency band with the frequency sweep power, to redetermine the oscillation frequency at which the reflection ratio of the reflected power to the supply power assumes the minimum value, and
the control part is configured to adjust the feeding power supplied to the power feeding part, in accordance with the minimum reflected power at the redetermined oscillation frequency.

4. The microwave heating device according to claim 1, wherein
posterior to start of the heating operation at the oscillation frequency determined by the execution of the frequency sweep operation prior to start of the heating operation to the object to be heated in the heating chamber,
the control part interrupts the heating operation and re-executes the frequency sweep operation, to redetermine the oscillation frequency at which the minimum reflected power detected by the power detecting part is attained, and
the control part transits to the heating operation at the redetermined oscillation frequency.

5. The microwave heating device according to claim 4, wherein
the control part repetitively performs, at preset time intervals, the heating operation and a heating operation stop of interrupting the heating operation and executing the frequency sweep operation.

6. The microwave heating device according to claim 4, wherein
posterior to start of the heating operation, the control part performs a heating operation stop of interrupting the heating operation and executing the frequency sweep operation, when the reflected power detected by the power detecting part becomes equal to or more than a predetermined threshold value.

7. The microwave heating device according to claim 6, wherein
the control part interrupts the heating operation and executes the frequency sweep operation, when the reflected power detected by the power detecting part fails to become equal to or more than the threshold value within a preset time.

8. The microwave heating device according to any one of claims 1 to 7, further comprising
a power divider part that divides the output of the oscillator part to supply to a plurality of power amplifier parts, wherein
outputs of the plurality of power amplifier parts are respectively supplied to a plurality of power feeding parts, to radiate microwaves into the heating chamber.

9. The microwave heating device according to any one of claims 1 to 7, further comprising
a power divider part that divides the output of the oscillator part to supply to a plurality of power amplifier parts,
a phase control part that allows phases of microwave power supplied to the plurality of power amplifier parts to be variable, wherein
outputs of the plurality of power amplifier parts are respectively supplied to a plurality of power feeding parts, to radiate microwaves into the heating chamber.

10. A microwave heating method, comprising:
outputting by an oscillator part a signal at an oscillation frequency within a prescribed frequency band;
amplifying power of an output of the oscillator part by a power amplifier part;
supplying an output of the power amplifier part by a power feeding part to a heating chamber;
detecting, by a power detecting part, reflected power that reflects from the heating chamber side to the power amplifier part via the power feeding part and supply power that is supplied from the power amplifier part to the power feeding part;
controlling, by a control part receiving a reflected power signal and a supply power signal from the power detecting part, the oscillation frequency of the oscillator part and the output of the power amplifier part;
prior to start of a heating operation to an object to be heated in the heating chamber, executing a frequency sweep operation of a prescribed frequency band with frequency sweep power being lower than rated supply power being output as a microwave to the object to be heated in the heating chamber when the heating operation is performed, to search for minimum reflected power;
adjusting, in accordance with the minimum reflected power, feeding power to be supplied to the power feeding part when the heating is performed; and
executing the heating operation at an oscillation frequency that exhibits the minimum reflected power in the frequency sweep operation.

11. The microwave heating method according to claim 10, further comprising:
prior to start of the heating operation to the object to be heated in the heating chamber,
executing the frequency sweep operation of the prescribed frequency band with the frequency sweep power, to determine an oscillation frequency at which a reflection ratio of the reflected power to the supply power assumes a minimum value; and
adjusting, in accordance with the minimum reflected power at the determined oscillation frequency, the feeding power supplied to the power feeding part.

12. The microwave heating method according to claim 10, further comprising:
prior to start of the heating operation to the object to be heated in the heating chamber, executing the frequency sweep operation of the prescribed frequency band with the frequency sweep power, to determine an oscillation frequency at which the reflected power detected by the power detecting part becomes minimum;
posterior to start of the heating operation at the determined oscillation frequency, interrupting the heating operation and executing the frequency sweep operation, to redetermine the oscillation frequency at which the reflected power detected by the power detecting part becomes minimum; and
transitioning to the heating operation at the redetermined oscillation frequency.

13. The microwave heating method according to claim 12,
wherein
the heating operation and a heating operation stop of interrupting the heating operation and executing the frequency sweep operation are repetitively performed at preset time intervals.

14. The microwave heating method according to claim 12,
wherein
posterior to start of the heating operation, a heating operation stop of interrupting the heating operation and executing the frequency sweep operation is performed, when the reflected power detected by the power detecting part becomes equal to or more than a predetermined threshold value.

15. The microwave heating method according to claim 14,
wherein
the heating operation is interrupted and the frequency sweep operation is executed, when the reflected power detected by the power detecting part fails to become equal to or more than the threshold value within a preset time.
